Europäisches Patentamt

(19) European Patent Office

Office européen des brevets

(11) Publication number: **0 242 157**
**B1**

(12) **EUROPEAN PATENT SPECIFICATION**

(45) Date of publication of the patent specification:
29.08.90

(21) Application number: 87303201.5

(22) Date of filing: 13.04.87

(51) Int. Cl.⁵: **E21D 11/15, F16L 9/22**

(54) Improvements in or relating to tunnel lining segments and tunnel linings formed therefrom.

(30) Priority: **14.04.86 GB 8609064**

(43) Date of publication of application:
**21.10.87 Bulletin 87/43**

(45) Publication of the grant of the patent:
**29.08.90 Bulletin 90/35**

(84) Designated Contracting States:
**DE FR GB IT**

(56) References cited:
**DE-A- 2 339 315**
**FR-A- 1 292 256**
**FR-A- 2 264 921**
**FR-A- 2 345 583**
**US-A- 2 077 137**

(73) Proprietor: **Stanton PLC, Stanton-by-Dale Ilkeston Derbyshire(GB)**

(72) Inventor: **Curtis, David John, 41 Pine Avenue, West Wickham Kent(GB)**
Inventor: **Greatorex, Cyril Barrie, 83 Kennedy Drive Stapleford, Nottingham Nottinghamshire(GB)**

(74) Representative: **Heath, Peter William Murray, FRY HEATH & CO. St. Georges House 6 Yattendon Road, Horley Surrey RH6 7BS(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to tunnel lining segments and tunnel linings formed therefrom. Such segments are generally rectangular having two opposite edges adapted to face axially of the tunnel lining, and the alternate two opposite edges adapted to face circumferentially of the lining, the segments being curved in the circumferential direction such that when a plurality of segments are assembled together at their circumferential facing edges by means, such as nuts and bolts, they can form a lining ring inside the bored underground tunnel, a succession of such rings being interconnected to construct the complete tunnel lining.

In certain uniform soils and rocks it is possible to construct a flexible articulated lining where the circumferential joints between segments forming a ring are not rigidly connected but are secured together in such a manner that the joint can deflect whereby differential ground movement around the lining can be accommodated to a certain extent.

Hitherto, such segments, formed of grey iron, ductile iron, steel or concrete, have been proposed with the necessary articulation capability provided by a form of ball and socket profile at the circumferentially facing ends of the segments. However, such profiles are difficult to produce due to the inherent surface roughness and inaccuracies of the cast surface, thereby giving poor transmission of the high hoop compressive stress and introducing unwanted bending moments across the joint and poor dimensional control. Alternative machining of the complex profile is expensive, and in order to minimise the number of such joints, resultant segments have tended to be large and cannot therefore economically be produced by modern automated cast moulding machines.

DE-A 2 339 315 and FR-A 2 264 921 both disclose a tunnel lining segment of generally rectangular configuration including supporting and connecting flanges adjacent the circumferentially facing edges of the segment in which at least one of the flanges is provided on its outer surface with a projection arranged in use to engage with a circumferentially facing flange on an adjacent segment during assembly of a lining ring.

It is an object of the present invention to provide tunnel lining segments capable of assembly into a lining having rings of potential flexibility at the connections between the segments.

In accordance with the invention, there is provided a tunnel lining segment of generally rectangular configuration having two opposite edges arranged in use to face axially of the tunnel lining, and the alternate two opposite edges arranged in use to face circumferentially of the tunnel lining, the segment being curved in the circumferential direction concave inwardly; supporting and connecting flanges extending inwardly of the segment adjacent the circumferentially facing edges thereof; at least one of the flanges being provided on its outer surface with a finger extending inwardly of the segment and arranged to engage with a circumferentially facing flange on an adjacent segment during assembly of a lining ring; characterised in that the finger is formed of material which is plastically deformable on the application of pressure thereto.

Both circumferentially facing flanges of the segment may be provided with a finger such that fingers of adjacent segments engage during assembly of a lining ring. Alternatively, one flange may be provided with finger engaging pads of larger size than the figure for easier abutment with the finger of an adjacent segment and prevention of finger misalignment.

The finger may be formed of a malleable material, as indeed may the total segment. This material may be steel or spheroidal graphite iron commonly known as ductile iron.

The finger may have a machined outer surface such that the relative curvature between adjacent circumferential segments when secured together is accurately controlled to the desired value. The deformability of the finger enables it to be crushed under the influence of a significant bending moment caused, for example, by differential ground movement. The formed lining ring is thereby capable of flexibility in disposition.

The or each circumferential flange which is provided, according to the invention with a finger may be provided with at least two such fingers spaced apart across the flange.

At least one of the circumferentially facing flanges may be provided with an outwardly facing rib extending thereacross such as to engage with the associated circumferentially facing flange of an adjacent circumferential segment or an equivalent outwardly facing rib thereon. The ribs may be machined for accurate location of the segments.

Whilst such ribs may be provided on both circumferentially facing flanges, it will be understood that, to avoid misalignment problems, such ribs may only be placed on one such flange on each segment.

Supporting and connecting flanges may also be provided extending inwardly of the segment adjacent the axially facing edges thereof.

The outer surface of the segment may be provided with a bearing ring portion extending in the circumferential direction. The bearing ring portion may be adapted to extend beyond the circumferential edge of the segment on one side, and stop short of the circumferential edge on the other side to an equivalent extent, whereby on assembly overlap of the bearing strip across adjacent assembled segments in a ring is provided. One such bearing ring may be provided at each axially facing end of the segment.

The invention includes within its scope a tunnel lining incorporating a segment as herein defined. In order that the invention may be more readily understood, one embodiment thereof will now be described by way of example with reference to the accompanying drawings in which:

Figure 1 is an isometric view from the inside of a segment according to the invention; and

Figure 2 is a section on the connection between two segments of a tunnel lining ring looking in the axial direction thereof;

Figure 3 is an enlarged view of one end of a modification of the segment of Figure 1 looking circumferentially; and

Figure 4 is a part section on the line IV–IV of Figure 3 looking in the axial direction thereof.

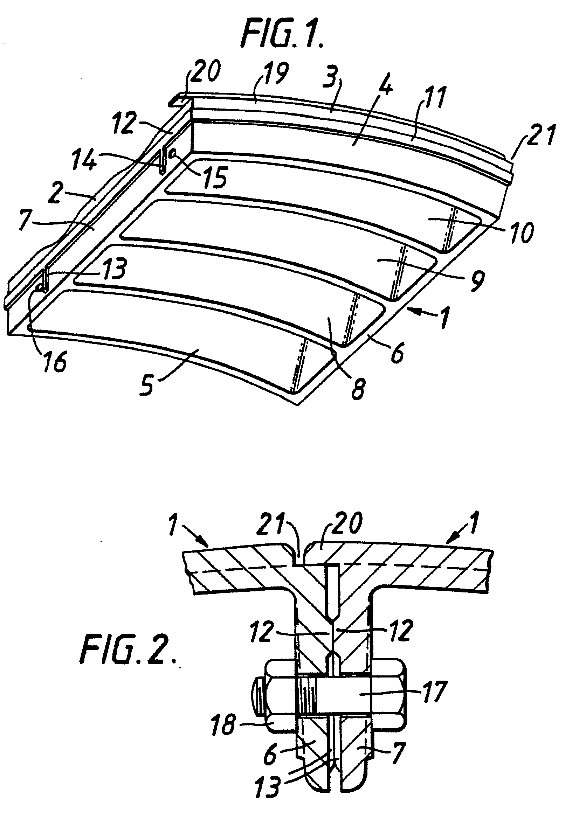

Referring now to the drawings it will be seen that the tunnel lining segment 1 of Figure 1 comprises a generally rectangular member having circumferentially facing sides 2 and axially facing sides 3 (with respect to the disposition of the finally assembled tunnel lining).

As will be seen, the segment 1 is generally concave inwardly so as to provide the necessary curvature in the assembled ring of the tunnel lining.

Supporting and connecting flanges 4, 5, 6 and 7 are provided around the edges of the segment extending inwardly thereof, together with three additional support ribs 8,9 and 10 extending between the circumferentially facing edges. Engagement ribs 11, 12 are provided around the four edge flanges, these ribs being machined so as to provide accurate engagement with corresponding ribs of adjacent segments. The circumferentially facing flanges 6 and 7 are additionally provided with downwardly extending machined fingers 13, 14 adjacent bores 15, 16 by means of which two lining segments may be interconnected to assemble a ring for the tunnel lining by means of nuts and bolts 17, 18. Each axially facing end of each segment is provided with a bearing strip 19 which, on one circumferential edge of the segment extends over the edge as shown at 20, and on the other circumferentially facing edge is set back from the edge by a generally equivalent amount as shown at 21. As shown in Figure 2 this enables one segment to overlap the next by means of the bearing strips.

It is to be noted that the circumferentially facing flanges 6 and 7 provide sufficient rigidity to the unit for handling, and that the machined ribs 11 and 12 and fingers 13 and 14 ensure the connected segments form a smooth curve of the correct outer radius for the lining ring.

In order to prevent the risk of radial (shear) displacement of the assembled segments of the ring, the overlap of the bearing strips provides an interlock between successive segments.

A prime requirement of a flexible tunnel lining is that, when the cross section of the lining is deformed from the theoretical circular shape by differential ground movement, for example, the joints should transmit the minimum possible bending moment. Any bending moment transmitted across the joint increases the stresses in the segments and, unless otherwise dealt with, would require stronger, heavier and more expensive segments.

The machined fingers on the circumferentially facing flanges provide stability to the unit up to and during installation, and are designed to crush and deform under any significant bending moment (caused by differential ground movement, for example) thereby resulting in a reduction in the radius of curvature of the lining.

Similarly the bolts interconnecting the flanges can be designed to stretch under bending in the opposite sense. Changes in curvature of the tunnel lining tend to cause the ribs between adjacent segments to bear on their inner or outer edges, thereby causing some slight eccentricity of the line of action of the circumferential stress. Moreover the arrangement exploits the ability of ductile iron to deform plastically under high load, and by optimising the width of the loading strip, plastic deformation of the metal redistributes the load until under working conditions, it is transmitted very near to the optimum position.

The bearing strips which are accurately machined are located at each end of the segment at the optimum radial position, i.e. at the position to maximise the load carrying ability of the completed lining.

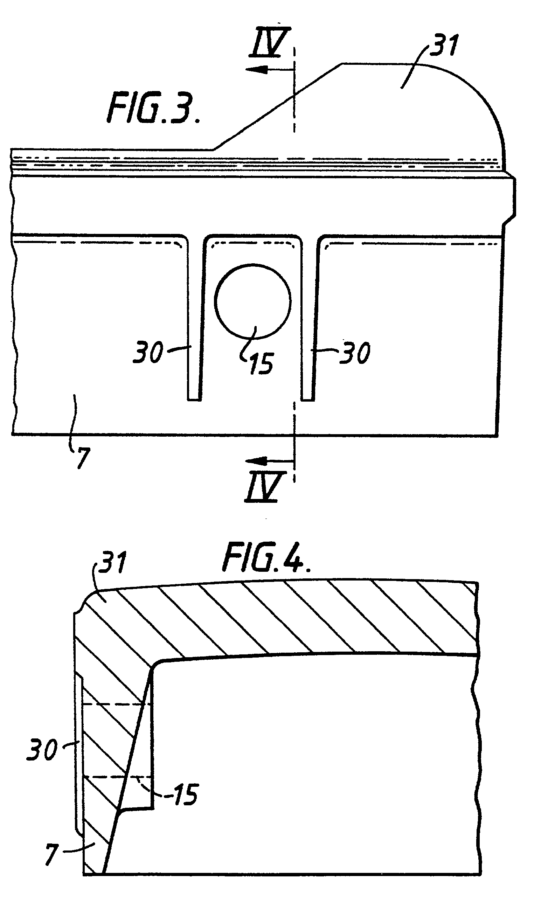

Figures 3 and 4 illustrate a variation in configuration of part of the segment. Thus the circumferential flange 7 is provided with a pair of fingers 30 one each side of connecting bores 15.

Again the bearing strip 31 (equivalent to that marked 19 in Figures 1 and 2) is smoothly contoured for ease of casting, and omits extension 20 and set back 21 of Figures 1 and 2.

By means of the invention as particularly described, it is possible to provide segments of relatively small size suitable for automated cast moulded machines which can then be factory assembled to segments of optimum size and weight for on-site assembly. Again it provides an arrangement by which segments can be assembled into sufficiently rigid units for the provision of a strong tunnel lining which, when in service, provide a freely articulated flexible lining.

## Claims

1. A tunnel lining segment (1) of generally rectangular configuration have two opposite edges (3) arranged in use to face axially of the tunnel lining, and the alternate two opposite edges (2) arranged in use to face circumferentially of the tunnel lining, the segment being curved in the circumferential direction concave inwardly; supporting and connecting flanges (6, 7) extending inwardly of the segment (1) adjacent the circumferentially facing edges (2) thereof; at least one of the flanges (6, 7) being provided on its outer surface with a finger (13, 14, 30) extending inwardly of the segment (1) and arranged to engage with a circumferentially facing flange on an adjacent segment during assembly of a lining ring; characterised in that the finger (13, 14, 30) is formed of material which is plastically deformable on the application of pressure thereto.

2. A segment (1) as claimed in Claim 1 wherein both circumferentially facing flanges (6, 7) are provided with a finger (13, 14, 30) such that fingers of adjacent segments mutually engage during assembly of a lining ring.

3. A segment as claimed in Claim 1 wherein one flange (6, 7) is provided with finger engaging pads of larger size than the finger (13,14,30) for easier abutment with the finger of an adjacent segment and prevention of finger misalignment.

4. A segment (1) as claimed in Claims 1 2 or 3 wherein the finger (13, 14, 30) is formed of a malleable material.

5. A segment (1) as claimed in Claim 4 formed in total of a malleable material.

6. A segment (1) as claimed in Claim 4 or 5 wherein the malleable material is steel or spheroidal graphite iron.

7. A segment (1) as claimed in any one of the preceding claims wherein the finger (13, 14, 30) has a machined outer surface such that the relative curvature between adjacent circumferential segments (1) when secured together is accurately controlled to the desired value.

8. A segment (1) as claimed in any one of the preceding claims wherein the or each circumferential flange (2) provided with a finger is provided with at least two such fingers (30) spaced apart across the flange.

9. A segment (1) as claimed in any one of the preceding claims wherein at least one of the circumferentially facing flanges (2) is provided with an outwardly facing rib (12) extending thereacross such as to engage with the associated circumferentially facing flange of an adjacent circumferential segment or an equivalent outwardly facing rib thereon.

10. A segment (1) as claimed in Claim 1 wherein the ribs (12) are machined for accurate location of the segments.

11. A segment (1) as claimed in Claim 10 wherein the ribs (12) are only placed on one circumferentially facing flange on each segment.

12. A segment (1) as claimed in any one of the preceding claims wherein the outer surface of the segment is provided with a bearing strip portion (19) extending in the circumferential direction.

13. A segment (2) as claimed in Claim 12 wherein the bearing strip portion (19) is adapted to extend beyond the circumferential edge (2) of the segment (1) on one side, and stop short of the circumferential edge (2) on the other side to an equivalent extent, whereby on assembly overlap of the bearing strip (19) across adjacent assembled segments (1) in a ring is provided.

14. A tunnel lining incorporating a segment (1) as claimed in any one of the preceding claims.

**Patentansprüche**

1. Ein Tunnelauskleidungssegment (1) allgemein rechteckiger Konfiguration, bei dem zwei gegenüberliegende Kanten (3) im Einsatz axial zur Tunnelauskleidung gerichtet angeordnet sind und die beiden anderen gegenüberliegenden Kanten (2) im Einsatz in Umfangsrichtung zur Tunnelauskleidung angeordnet sind, das in Umfangsrichtung konkav nach innen gebogen ist und mit Stütz- und Verbindungsflanschen (6, 7) versehen ist, die sich vom Segment (1) anstoßend an seine in Umfangsrichtung weisenden Kanten (2) nach innen erstrecken, wobei mindestens einer der Flansche (6, 7) an seiner Außenfläche mit einem Finger (13, 14, 30) versehen ist, der sich vom Segment (1) nach innen erstreckt und so angeordnet ist, daß er während der Montage eines Auskleidungsrings in einen in Umfangsrichtung weisenden Flansch an einem anstoßenden Segment eingreift, und sich dadurch auszeichnet, daß der Finger (13, 14, 30) aus einem bei auf es ausgeübtem Druck plastisch verformbaren Material besteht.

2. Ein Segment (1) gemäß Anspruch 1, bei dem beide in Umfangsrichtung weisenden Flansche (6, 7) einen Finger (13, 14, 30) aufweisen, der so ausgelegt ist, daß Finger aneinander anstoßender Segmente während der Montage eines Auskleidungsrings ineinander eingreifen.

3. Ein Segment gemäß Anspruch 1, bei dem ein Flansch (6, 7) mit Fingerauflagen versehen ist, die zwecks leichterer Widerlage an den Finger eines anstoßenden Segments und Verhinderung einer Fingerfehlausrichtung größer gestaltet sind als der Finger (13, 14, 30).

4. Ein Segment (1) gemäß Ansprüchen 1, 2 oder 3, bei dem der Finger (13, 14, 30) aus einem formbaren Material besteht.

5. Ein Segment (1) gemäß Anspruch 4, das vollständig aus einem formbaren Material besteht.

6. Ein Segment (1) gemäß Anspruch 4 oder 5, bei dem das formbare Material Stahl oder Kugelgraphitgußeisen ist.

7. Ein Segment (1) gemäß einem der vorhergehenden Ansprüche, bei dem der Finger (13, 14, 30) eine spanhebend bearbeitete Außenfläche aufweist, so daß die relative Krümmung zwischen in Umfangsrichtung aneinanderstoßenden Segmenten (1) nach dem Verbinden dieser entsprechend dem gewünschten Wert präzise geregelt ist.

8. Ein Segment (1) gemäß einem der vorhergehenden Ansprüche, bei dem der oder jeder mit einem Finger versehene, in Umfangsrichtung weisende Flansch (2) mindestens zwei derartige Finger (30), die in Abständen am Flansch angeordnet sind, aufweist.

9. Ein Segment (1) gemäß einem der vorhergehenden Ansprüche, bei dem mindestens einer der in Umfangsrichtung weisenden Flansche (2) mit einer nach außen gerichteten Rippe (12) versehen ist, die sich so über den Flansch erstreckt, daß sie in den zugeordneten, in Umfangsrichtung weisenden Flansch eines anstoßenden, in Umfangsrichtung weisenden Segments oder in eine gleichermaßen nach außen gerichtete Rippe daran eingreift.

10. Ein Segment (1) gemäß Anspruch 9, bei dem die Rippen (12) für genaue Passung der Segmente spanhebend bearbeitet sind.

11. Ein Segment (1) gemäß Anspruch 10, bei dem die Rippen (12) an jedem Segment nur an einem in Umfangsrichtung weisenden Flansch angeordnet sind.

12. Ein Segment (1) gemäß einem der vorhergehenden Ansprüche, bei dem die Außenfläche des Segments mit einem in Umfangsrichtung laufenden Lagerstreifen (19) versehen ist.

13. Ein Segment (1) gemäß Anspruch 12, bei dem der Lagerstreifen (19) so geändert wurde, daß er auf einer Seite über die in Umfangsrichtung weisende Kante (2) des Segments (1) hinausragt und auf der anderen Seite in gleichem Maße von der in Umfangsrichtung weisenden Kante zurückversetzt ist, wodurch bei der Montage eine Überlappung des Lagerstreifens (19) über aneinander anstoßend montierte Segmente (1) in einem Ring gegeben ist.

14. Eine Tunnelauskleidung mit einem Segment (1) gemäß einem der vorgenannten Ansprüche.

**Revendications**

1. Un segment de revêtement de tunnel (1), ayant en général une configuration rectangulaire, et dont les deux bords opposés (3) sont agencés, lors de l'utilisation, de manière à faire face à l'axe du revêtement de tunnel, alors que les deux bords opposés alternants (2) sont agencés, lors de l'utilisation, de manière à faire face à la circonférence du revêtement de tunnel, le segment étant, incurvé dans un sens circonférentiel concave vers l'intérieur; des brides de support et de liaison (6, 7) se prolongeant vers l'intérieur du segment (1) adjacent aux bords faisant face à la circonférence (2) dudit segment; l'une au moins de ces brides (6, 7) comportant, à sa surface externe, une entaille (13, 14, 30) qui se prolonge vers l'intérieur du segment (1) et agencée de manière à s'emboîter avec une bride faisant face à la circonférence sur un segment adjacent lors de l'assemblage d'un anneau de revêtement; caractérisé par le fait que l'entaille (13, 14, 30) est fabriquée en un matériau déformable du point de vue plan plastique, lorsqu'on y exerce une pression.

2. Un segment (1), conforme aux stipulations de la revendication 1, sur lequel les deux brides faisant face à la circonférence (6, 7) sont munies d'une entaille (13, 14, 30) de sorte que les entailles des segments adjacents s'emboîtent les unes dans les autres lors de l'assemblage d'un anneau de revêtement.

3. Un segment conforme aux stipulations de la revendication 1, sur lequel une bride (6, 7) est munie de patins d'emboîtement d'entaille dont la dimension est supérieure à celle de l'entaille (13, 14, 30) afin de faciliter l'aboutement avec l'entaille d'un segment adjacent et d'éviter tout mauvais alignement des entailles.

4. Un segment (1), conforme aux stipulations des revendications 1, 2 ou 3, sur lequel l'entaille (13, 14, 30) est constitué d'un matériau malléable.

5. Un segment (1), conforme aux stipulations de la revendication 4, entièrement constitué d'un matériau malléable.

6. Un segment (1), conforme aux stipulations des revendications 4 ou 5, dans lequel le matériau malléable est l'acier ou la fonte nodulaire.

7. Un segment (1), conforme aux stipulations de l'une quelconque des revendications précédentes, sur lequel l'entaille (13, 14, 30) comporte une surface externe usinée, de sorte que la courbure relative entre les segments circonférentiels adjacents (1), une fois assujettis ensemble, soit contrôlée avec précision à la valeur souhaitée.

8. Un segment (1), conforme aux stipulations de l'une quelconque des revendications précédentes, sur lequel la (ou chaque) bride circonférentielle (2) comportant une entaille possède au moins deux entailles (30) de ce genre situées à certains intervalles sur la bride.

9. Un segment (1), conforme aux stipulations de l'une quelconque des revendications précédentes, sur lequel l'une au moins des brides faisant face à la circonférence (2) est munie d'une nervure dirigée vers l'extérieur (12), et se prolonge de manière à s'emboîter avec la bride associée faisant face à la circonférence d'un segment circonférentiel adjacent ou une nervure équivalente, dirigée vers l'extérieur, qui serait fixée dessus.

10. Un segment (1), conforme aux stipulations de la revendication 9, sur lequel les nervures (12) sont usinées en vue d'un positionnement correct des segments.

11. Un segment (1), conforme aux stipulations de la revendication 10, sur lequel les nervures (12) sont uniquement placées sur une bride faisant face à la circonférence sur chaque segment.

12. Un segment (1), conforme aux stipulations de l'une quelconque des revendications précédentes, sur lequel la surface externe du segment est munie d'une section de bande d'appui (19) se prolongeant dans le sens circonférentiel.

13. Un segment (1), conforme aux stipulations de la revendication 12, sur lequel la section de bande d'appui (19) est adaptée de façon à se prolonger au-dejà du bord circonférentiel (2) du segment (1) d'un côté, et à s'arrêter avant le bord circonférentiel (2) de l'autre côté, sur une distance équivalente – principe qui assure un chevauchement de la bande d'appui, lors de l'assemblage, sur les segments adjacents assemblés (1) d'un anneau.

14. Un revêtement de tunnel comportant un segment (1) conforme aux stipulations de l'une quelconque des revendications précédentes.

FIG.1.

FIG.2.

FIG.3.

FIG.4.